# EUROPEAN PATENT SPECIFICATION

(11) **EP 3 763 208 B1**
(45) Date of publication and mention of the grant of the patent: **25.09.2024**
(21) Application number: 20184785.2
(22) Date of filing: 08.07.2020
(51) Int. Cl.: A01M 1/20, A01M 1/00, A01M 3/00

(54) **FILTERING DEVICE FOR NATURAL CONTROL OF PROCESSIONARY CATERPILLARS**
FILTERVORRICHTUNG ZUR NATÜRLICHEN BEKÄMPFUNG DES EICHENPROZESSIONSSPINNERS
DISPOSITIF DE FILTRATION POUR LE CONTRÔLE NATUREL DES THAUMÉTOPOÉINES

(30) Priority: 08.07.2019 NL 2023458
(43) Date of publication of application: 13.01.2021
(73) Proprietor: Storix Boombeheer, 5142 GC Waalwijk (NL)
(72) Inventor: Stokwielder, Antonius Hendrikus Johannes, Waalwijk (NL)
(74) Representative: Patentwerk B.V.

(56) References cited:
- WO-A1-2008/065218
- CN-A- 106 035 288
- CN-U- 201 444 855
- CN-U- 203 597 253
- US-A- 1 534 734
- US-A- 3 319 375
- HELLINGHAM SILVIA: "Eikenprocoessierups Noord Nederland", BIOCONTROLE, vol. 172, 1 January 2010 (2010-01-01), pages 1 - 41, XP093051183
- HELLINGMAN SILVIA: "Monitoring 2010: Eikenprocessie definitief in het noorden", RAPPORT BIOCONTROLE, 14 November 2010 (2010-11-14), pages 115PP, XP055806339
- ANONYMOUS: "Nesten eikenprocessierups zitten vol parasieten, die moet je niet verbranden", DUURZAAM IN SALLAND, 25 July 2020 (2020-07-25), XP055806341, Retrieved from the Internet <URL:https://duurzaaminsalland.nl/gezondheid/nesten-eikenprocessierups-zitten-vol-parasieten-die-moet-je-niet-verbranden/> [retrieved on 20210520]
- DONOVAN B. J. ET AL: "Release and recovery of the introduced wasp parasitoid, Sphecophaga vesparum vesparum (Curtis) (Hymenoptera: Ichneumonidae) in New Zealand", NEW ZEALAND JOURNAL OF ZOOLOGY, vol. 16, no. 3, 1 January 1989 (1989-01-01), NZ, pages 355 - 364, XP055806352, ISSN: 0301-4223, DOI: 10.1080/03014223.1989.10422900
- STUIVENBERG NINO: "Kisten met eikenprocessierupsnesten moeten natuurlijke vijanden EPR stimuleren", 13 July 2020 (2020-07-13), XP055806345, Retrieved from the Internet <URL:https://www.boomzorg.nl/article/33717/kisten-met-eikenprocessierupsnesten-moeten-natuurlijke-vijanden-epr-stimuleren> [retrieved on 20210520]
- HELLINGMAN SILVIA: "Project Eikenprocessierups Stichting Boermarke Wapserveen", BOOMZORG.NL, 24 October 2019 (2019-10-24), pages 1 - 20, XP093073120, Retrieved from the Internet <URL:https//:eindrapportage-natuurlijke-bestrijding-eikenprocessierups-boermarke-2019-def--24-10-219_32%20(2).pdf> [retrieved on 20230811]

## Description

The present invention relates to a filtering device and a method for the natural control of processionary caterpillars.

Processionary caterpillars, and the oak and pine processionary caterpillars in particular, increasingly cause problem in society. The caterpillars are called processionary caterpillars because they move from tree to tree in procession, one after another. Oak processionary caterpillars also move to relocate from their nests towards the canopy of the tree, to feed there. Pine processionary caterpillars move large distances over ground, and also nest in the ground. Reproduction of the processionary caterpillars starts with an egg. These eggs evolve into caterpillars. After a certain period of time these caterpillars pupate, and a pupa is formed. This pupa evolves or transforms into a butterfly or moth, which when reproduces creates eggs which sets in motion a new cycle.

The caterpillars have dangerous stinging hairs, dangerous at least for humans and animals, which cause irritation and itching. De bodies of the caterpillars are covered in relatively long hairs, wherein at the abdomen of the caterpillar these hairs are shorter, arrow-shaped and provided with barbed hooks. These hairs at the abdomen detach easily from the body of the caterpillars. These hairs cause a skin rash, allergies and conditions to the respiratory system, the lungs and the eyes, potentially even causing blindness and other serious injuries.

Donovan B.J. et. al (in the New Zealand Journal of Zoology, vol 16, no. 3) describes the release and recovery of introduced wasp parasitoid, *Sphecophaga vesparum vesparum* in New Zealand with release boxes. CN201444855 describes a release bottle for a parasitic wasp in the pupal stage. Hellingman Silvia: Monitoring 2010: Eikenprocessie definitief in het Noorden describes the monitoring of processionary caterpillars in the Netherlands. Hellingman Silvia: Eikenprocessierups Noord Nederland, Biocontrole vol 172 of January 1st, 2010, describes developments of processionary caterpillars in 2010 in the Netherlands.

It is a goal of the present invention to provide in a natural solution to control the processionary caterpillars.

The present invention thereto provides a filtering device according to claim 1.

A nest of the processionary caterpillar typically is a collection of at least one, and preferably multiple caterpillars and/or (later on) pupae of the processionary caterpillar and their natural enemies. Typically a nest contains about 150 pupa, although sizes of nests vary strongly. In nature, natural enemies or predators of the caterpillar predate on the caterpillars (for instance on the eggs or caterpillars), such that a number of these pupa contain natural enemies of the processionary caterpillar or will bring forward natural enemies instead of processionary caterpillars. These natural enemies use the caterpillars to reproduce themselves, and parasite on the caterpillars. In nature the inventors found that about 72% of the nest of the caterpillar is parasitized upon, depending on the natural surroundings. So, the nest, when allowed to evolve, hatch or transform, will produce butterflies of the caterpillar, as well as their natural enemies like ichneumon wasps or tachinid flies.

These natural enemies preferably are allowed to hatch and grow up in a protected environment, in order to boost the population of natural enemies or predators of the processionary caterpillar. The container provides them with shelter and protection. Once hatched, transformed or evolved and rested, the new natural enemies can exit the container through the at least one exit opening. By placing the nest into the container, the natural enemies also present in the nest are protected from their predators and natural enemies, as well as from being trampled or run over by humans, cars and land mowers, for instance when they fall onto the ground in winter.

The nest, containing natural enemies of the processionary caterpillars to be hatched, is thus contained in the container, and protected inside the container from bird, other parasites or hostile weather conditions. It also prevents them from falling onto the ground, being trampled or harmed otherwise. By protecting the pupae of the natural enemies of the caterpillars, and also protect the natural enemies that hatch from the nests, the amount of natural enemies can be increased, since more natural enemies hatch.

From the same nest also butterflies of the processionary caterpillar will hatch, which butterflies are typically (way) larger than the natural enemies described above. The exit openings, through which the (smaller) enemies can leave the container are dimensioned such that the larger butterflies cannot escape the container, or at least prevent at least some of the butterflies to escape. After hatching, and typically within a day or several hours, the butterflies will die inside the container, interrupting the life cycle of the processionary caterpillar. The present invention thus aims to increase the number of natural enemies or predators of the processionary caterpillar and reduce the number of processionary caterpillars, which reduction over time increases due to the increase of natural enemies to naturally control the processionary caterpillars.

The ability to filter the butterflies from the natural enemies is a result of the difference in shape and size between the two. Typically, the body of the oak processionary butterfly is about 3 millimetres wider compared to the body of its natural enemy. As an example, say the butterfly is about 8mm wide, and the natural enemy is about 5mm wide. By dimensioning the exit opening such that it is about 5,5 or 6mm wide, the natural enemies are able to leave through the opening, but the butterfly is not.

The, at least one, exit opening is formed by a perforated plate. Alternatively, a mesh is relatively easy to produce wherein the mesh size, or the size of the openings in the mesh, can be controlled. On top, a mesh provides relatively many exit openings for the natural enemies of the caterpillar, while preventing outflow of butterflies from the container.

The exit openings have a size, dimension, diameter or width between 3 and 6 mm and more in particular between 4 and 6 mm. The size of the openings should at least be such that natural enemies or predators of the processionary caterpillar should be able to leave the container, at least to some extent, while preventing butterflies of the processionary caterpillar to leave the container, at least to some extent. The filtering device thus filters the natural enemies that hatched from the nest from the butterflies of the processionary caterpillar. Compared to butterflies of the processionary caterpillar the natural enemies have a relative small width, such that when the exit openings are relatively narrow, tachinid flies or wasps can leave the container, but butterflies cannot. Butterflies, especially of the processionary caterpillar, have relatively wide torsos or middle sections, in particular compared to natural enemies, allowing to filter them from each other with the appropriate exit opening selection.

The same exit openings could potentially also be used for natural enemies of the processionary caterpillar to gain access to the nest to parasite upon the nest, the eggs and/or the pupa in the nest.

The closing element is for instance provided with a lock, to keep the closing element in the closed condition. Locking the closing element prevents that the container is opened by accident or through though weather conditions, and thus prevents mainly butterflies or the nest from leaving the container unintentionally.

The filtering device may also comprise an attachment, for attaching the device to or onto a tree, wherein the attachment for instance comprises an attachment beam, which beam is to be attached to the tree as well as the container. The beam may for instance be arranged to be attached vertically to the tree, in particular along the longitudinal direction of the tree, wherein preferably the beam is thicker on top compared to the bottom, such that the container, compared to the tree, is slightly tipping over. Alternatively the container may be dug into the ground at least partially. Alternatively, an eyelet of provided, for instance on top of the filtering device, and a hook or a cable is attached to the tree. By attaching the eyelet and the hook or cable, the filtering device can be hoisted into the tree.

The use of a beam provides a relatively easy way to attach the container to a tree. Additionally it is possible to provide the beam to the tree ones, after which for instance multiple containers or filtering devices can be attached sequentially, without further damaging the tree. By reducing the thickness towards the bottom the filtering device is somewhat slanted, allowing water and rain to flow from the filtering device naturally, preventing water or rain to collect onto or into the filtering device.

The container may be provided with a bottom, at least one side wall and a roof, wherein the entry opening and the closing element may be provided in the at least one side wall, and wherein preferably also the exit opening may be provided in the at least one side wall. The nest may for instance be located onto the bottom, wherein the side wall(s) and the roof contain the nest together with the bottom.

The container may be substantially made of wood, preferably FSC certified, or a mesh. Wood has the benefit that it is a natural product, relatively easy to process. Mesh has the advantage that this material is already provided with a (large) number of openings to achieve the filtering action proposed by the invention. Mesh also allows a proper balancing of moisture inside the nest. The dimension or size of the mesh should be aimed at the function of the filtering device, and should thus prohibit butterflies of the caterpillar to go through the openings to at least some extent, and allow natural enemies or predators to go through.

It is also envisionable that the container is mainly made of (sheet-) metal, or perforated and non-perforated metal plating. This provides a sturdy structure, which may last a long time and provide reliable action over time.

In an embodiment the container is mainly cylindrical, and made of perforated plate, for instance metal plate. Again this provides a robust device, capable of withstanding tough weather and protect the nest(s) inside.

The container, and in particular the bottom and the roof of the filtering device, may be made of plastic, in particular of recycled plastic. Recycled plastic reduces the environmental load the plastic may have, and can also be recycled again when the bottom and roof of the filtering device can no longer be used accordingly or need changing.

The container and/or the at least one side wall may at least partially be permeable to air, to allow proper ventilation of the filtering device.

The filtering device may comprise a second side wall, at least partially surrounding the side wall, or at least partially surrounding the exit opening(s). The second side wall is also provided with openings, to allow ventilation of the filtering device. The second side wall is preferably arranged at a distance from the side wall, and in particular arranged at a distance from the exit opening(s) of the filtering device.

This way, an intermediate space is created between the exit opening(s) and the second side wall. The openings of the second side wall are typically dimensioned such that the natural enemies, that emerged from the container, can enter the intermediate space but cannot leave the intermediate space through the second side wall. In the intermediate space reservoirs of water and food, such as sugary water, can be arranged, to feed and strengthen the natural enemies such as the tachinid fly. This intermediate space allows for a collection of the natural enemies, such that the number of natural enemies that emerged from the container can be counted and registered. After counting, the second side wall can be removed temporarily, to free the natural enemies from the intermediate space, and start the process again. By counting the natural enemies the efficiency of the filtering device can be determined, and the natural control process can be adjusted accordingly.

The entry opening is provided on the top of the container, and the closing element that closes the entry opening is the roof of the container. The closing element is connected to a number of (mainly horizontally extending) plateaus, via a central substantially vertical rod. Nests of the processionary caterpillar can be arranged on these plateaus, and having multiple of these increase the number of nests that the container may hold. A further benefit of this arrangement is that the nests can easily be removed from the container by lifting the roof of the container, since in the same motion the plateaus and the nests on the plateaus can be removed from the filtering device.

The present invention also relates to a method for natural control of processionary caterpillars with a device according to the invention, comprising the steps of: a. Placing an at least partially closable container, for instance in a tree or in the ground; b. Placing a nest with pupae or caterpillars of the processionary caterpillar, as well as pupae of their natural enemies, into the container; c. At least partially closing the container and allowing the nest to transform, evolve or hatch; d. Allowing natural enemies of the processionary caterpillar, such as the tachinid fly or ichneumon wasp, to exit the container; and e. Preventing at least some of the butterflies of the processionary caterpillars to escape from the container.

The method may further comprise the step of leaving the nest in its natural environment for a period of time, typically until the pupa stage, and then placing the nest into the container. The period of time preferably is the period of the stage of the caterpillar and preferably at least two weeks of the stage of the pupa. This allows natural enemies or predators to attack or parasite upon the nest. For instance the ichneumon wasp parasites the eggs or caterpillars of the processionary caterpillars. By not burning or removing the nests, but placing the nests into containers it allows more of the natural enemies or predators to hatch. The butterflies of the processionary caterpillars are kept contained in the container, while the natural enemies can leave populate the surroundings. These subsequently parasite on the next line of processionary caterpillars, and also parasite on other species like the winter moth (*Operophtera brumata*) and gypsy moth (*Lymantria dispar)*, preventing further plagues of these moths and butterflies. The present invention aims to keep the impact on the ecosystem very low, without requiring extermination or poison.

In step a) the container may be placed facing north. Such orientation allows for a relatively natural mimicking of preferably climate conditions in the container, ventilation of the container and prevents excessive raining into the container.

In step a) the container may be placed such that the container is angled forward, compared to the vertical, wherein the container is preferably angled 1 to 5 degrees of the vertical. This slanting results in a natural dewatering of the device, preventing water to accumulate into or onto the container. Alternatively the container may be hoisted into a tree, for instance by providing an eyelet on top of the filtering device, attaching another eyelet or hook into the tree and running a rope or cable between them.

The method may further comprise the step of counting the number of natural enemies that emerged from the container in an intermediate space, and freeing the natural enemies after counting.

Although the invention has been described with relation to processionary caterpillars, the invention is also applicable to the natural control of other potential plagues in the same manner. Other plagues or harmful species include for instance the brown-tail moth (*Euproctis chrysorrhoea*).

The invention will be elucidated on the basis of non-limitative exemplary embodiments shown in the following figures, which are not according to the invention and are present for illustration purposed only. Herein:
- Figure 1 schematically shows a perspective view on a filtering device, in an opened state;
- Figure 2 schematically shows a perspective view on a filtering device, in an closed state; and
- Figure 3 schematically shows a butterfly and a ichneumon wasp, as well as a mesh with exit openings.

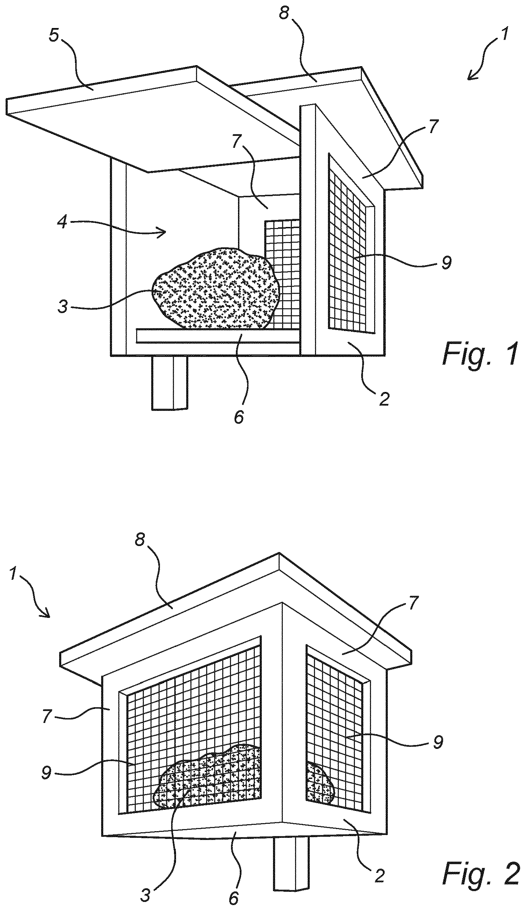

Figure 1 and figure 2 schematically show a view on a filtering device (1) for natural control of processionary caterpillars. The filtering device (1) comprises a container (2), for containing a nest (3) of the processionary caterpillar, wherein the container is provide with an entry opening (4) for placing the nest (3) in the container (2), and a closing element (5) for closing the entry opening (4).

The container (2) is provided with a bottom (6), side walls (7) and a roof (8), wherein the entry opening (4) and the closing element (5) are provided in a side wall (7). A portion of two of the side walls (7) is made of a mesh (9). The openings in the mesh (9) form exit openings to allow insects to leave the container (2). The openings are dimensioned such that natural enemies or predators can leave the container (2), but also such that butterflies of the processionary caterpillar cannot.

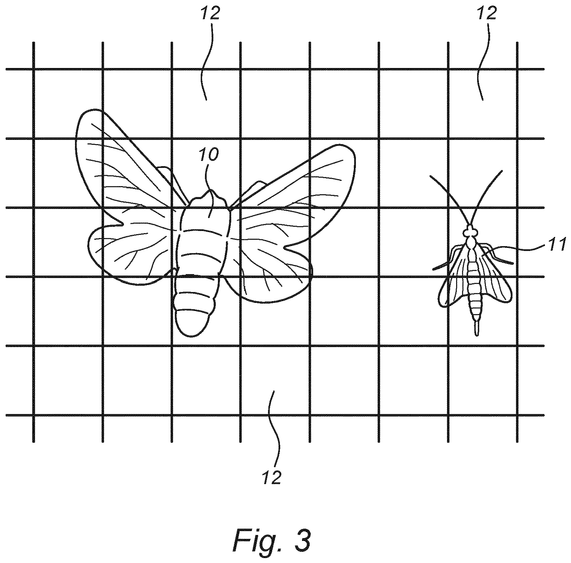

Figure 3 schematically shows an image of a butterfly (10) of the processionary caterpillar and ichneumon wasp (11), as well as a mesh (9) with exit openings (12). The butterfly (10) is larger than the ichneumon wasp (11), and the butterfly (10) cannot go through the exit openings (12), while the wasp (11) is not hindered or stopped by the limited dimensions of the exit openings (12). The dimension of the mesh is only schematically indicated in the figure. The mesh size should ideally be dimensioned such that the butterfly, also with its wings retracted, cannot go through the exit openings (12), while the wasp (11) can.

It is envisionable that the container is provided with dedicated openings, such as holes or a perforated plate, instead of a mesh or meshed wire.

## Claims

1. Filtering device (1) for natural control of processionary caterpillars, comprising:
a. A container (2), for containing and protecting a nest (3) of the processionary caterpillar and their natural enemies, wherein the container (2) is provided with:
i. An entry opening (4), for placing the nest into the container (2), wherein the entry opening (4) is provided on the top of the container (2);
ii. A closing element (5), for at least partially closing the entry opening (4), wherein the closing element (4) is the roof (8) of the container (2); and
iii. At least one exit opening (12), allowing insects to exit the container (2), formed by a perforated plate;
b. Wherein the exit opening (12) is dimensioned such that natural enemies of the processionary caterpillar, such as the tachinid fly or ichneumon wasp, can exit the container (2) and such that at least some of the butterflies of the processionary caterpillar cannot exit the container (2); and
c. Wherein the exit openings (12) have a dimension, diameter or width between 3 and 6 mm, in particular between 4 and 6 mm
d. **Characterized in that** the closing element (5) is connected to a number of mainly horizontally extending plateaus via a central substantially vertical rod.

2. Filtering device (1) according to any of the preceding claims, wherein the closing element (5) is provided with a lock, to keep the closing element (5) in the closed condition.

3. Filtering device (1) according to any of the preceding claims, wherein the device also comprises an attachment for attaching the device to or onto a tree, wherein the attachment comprises an attachment beam, which beam is to be attached to the tree as well as the container (2) or an eyelet, to hoist the filtering device (1) into a tree.

4. Filtering device (1) according to claim 3, wherein the beam is arranged to be attached vertically to the tree, in particular along the longitudinal direction of the tree, wherein preferably the beam is thicker on top compared to the bottom, such that the container (2), compared to the tree, is slightly tipping over.

5. Filtering device (1) according to any of the preceding claims, wherein the container is substantially made of wood or a mesh.

6. Filtering device (1) according to any of the preceding claims, wherein the container (2) and/or the at least one side wall (7) is at least partially permeable to air.

7. Method for natural control of processionary caterpillars, using a device (1) according to any of the preceding claims, comprising the steps of:
a. Placing an at least partially closable container (2), for instance in a tree or in the ground;
b. Placing a nest with pupae of the processionary caterpillar as well as pupae of their natural enemies into the container (2);
c. At least partially closing the container (2) and allowing the nest to evolve, transform or hatch;
d. Allowing natural enemies of the processionary caterpillar, such as the tachinid fly or ichneumon wasp, to exit the container (2); and
e. Preventing at least some of the butterflies of the processionary caterpillars to escape from the container (2).

8. Method according to claim 7, wherein in step a) the container (2) is placed facing north, for instance with at least one exit opening facing north.

9. Method according to claim 7 or 8, wherein in step a) the container (2) is placed such that the container (2) is angled forward, compared to the vertical, wherein the container (2) is preferably angled 1 to 5 degrees of the vertical.

10. Method according to any of claim 7-9, comprising the step of leaving the nest in its natural environment until pupa stage is reached before placing the nest into the container (2).

## Patentansprüche

1. Filtervorrichtung (1) zur natürlichen Kontrolle von Prozessionsraupen, umfassend:
a. einen Behälter (2) zum Aufnehmen und Schützen eines Nestes (3) der Prozessionsraupe und ihrer natürlichen Feinde, wobei der Behälter (2) versehen ist mit:
i. einer Eingangsöffnung (4), um das Nest in den Behälter (2) zu platzieren, wobei die Eingangsöffnung (4) an der Oberseite des Behälters (2) bereitgestellt ist;
ii. ein Verschlusselement (5) zum zumindest teilweisen Verschließen der Eingangsöffnung (4), wobei das Verschlusselement (4) das Dach (8) des Behälters (2) ist; und
iii. mindestens eine Ausgangsöffnung (12), die es Insekten erlaubt, aus dem Behälter (2) auszutreten, die durch eine perforierte Platte gebildet ist;
b. wobei die Ausgangsöffnung (12) derart bemessen ist, dass natürliche Feinde der Prozessionsraupe, wie etwa die Tachinidenfliege oder Ichneumonwespe, aus dem Behälter (2) austreten können, und dass mindestens einige der Schmetterlinge der Prozessionsraupe nicht aus dem Behälter (2) austreten können; und
c. wobei die Ausgangsöffnungen (12) eine Abmessung, einen Durchmesser oder Breite zwischen 3 und 6 mm, insbesondere zwischen 4 und 6 mm aufweisen,
d. **dadurch gekennzeichnet, dass** das Verschlusselement (5) über eine zentrale, im Wesentlichen vertikale Stange mit einer Anzahl von sich hauptsächlich horizontal erstreckenden Plateaus verbunden ist.

2. Filtervorrichtung (1) nach einem der vorstehenden Ansprüche, wobei das Verschlusselement (5) mit einer Verriegelung versehen ist, um das Verschlusselement (5) in dem geschlossenen Zustand zu halten.

3. Filtervorrichtung (1) nach einem der vorstehenden Ansprüche, wobei die Vorrichtung auch eine Halterung zum Befestigen der Vorrichtung an einen oder an einem Baum umfasst, wobei die Halterung einen Befestigungsbalken umfasst, der sowohl an dem Baum als auch an dem Behälter (2) oder einer Öse befestigt werden soll, um die Filtervorrichtung (1) in einen Baum zu heben.

4. Filtervorrichtung (1) nach Anspruch 3, wobei der Balken dazu eingerichtet ist, vertikal an dem Baum befestigt zu werden, insbesondere entlang der Längsrichtung des Baums, wobei der Balken bevorzugt oben im Vergleich zu dem Boden dicker ist, sodass der Behälter (2) im Vergleich zu dem Baum leicht gekippt ist.

5. Filtervorrichtung (1) nach einem der vorstehenden Ansprüche, wobei der Behälter im Wesentlichen aus Holz oder einem Netz hergestellt ist.

6. Filtervorrichtung (1) nach einem der vorstehenden Ansprüche, wobei der Behälter (2) und/oder die mindestens eine Seitenwand (7) mindestens teilweise luftdurchlässig ist.

7. Verfahren zur natürlichen Kontrolle von Prozessionsraupen unter Verwendung einer Vorrichtung (1) nach einem der vorstehenden Ansprüche, das die folgenden Schritte umfasst:
a. Platzieren eines mindestens teilweise verschließbaren Behälters (2), beispielsweise in einem Baum oder im Boden;
b. Platzieren eines Nestes mit Puppen der Prozessionsraupe sowie mit Puppen ihrer natürlichen Feinde in dem Behälter (2);
c. mindestens teilweises Schließen des Behälters (2) und Erlauben, dass sich das Nest entwickelt, umwandelt oder schlüpft;
d. Erlauben, dass natürliche Feinde der Prozessionsraupe, wie die Tachinidenfliege oder Ichneumonwespe, den Behälter (2) verlassen; und
e. Verhindern, dass mindestens einige der Schmetterlinge der Prozessionsraupen aus dem Behälter (2) entweichen.

8. Verfahren nach Anspruch 7, wobei in Schritt a) der Behälter (2) nach Norden gewandt platziert wird, beispielsweise mit mindestens einer nach Norden gewandten Ausgangsöffnung.

9. Verfahren nach Anspruch 7 oder 8, wobei in Schritt a) der Behälter (2) derart platziert wird, dass der Behälter (2) im Vergleich zu der Vertikalen nach vorn abgewinkelt ist, wobei der Behälter (2) bevorzugt um 1 bis 5 Grad zu der Vertikalen abgewinkelt ist.

10. Verfahren nach einem der Ansprüche 7-9, das den Schritt des Verlassens des Nestes in seiner natürlichen Umgebung umfasst, bis das Puppenstadium erreicht ist, bevor das Nest in den Behälter (2) platziert wird.

## Revendications

1. Dispositif de filtration (1) pour le contrôle naturel des chenilles processionnaires, comprenant :
a. un conteneur (2), pour contenir et protéger un nid (3) de la chenille processionnaire et de ses ennemis naturels, dans lequel le conteneur (2) est pourvu de :
i. une ouverture d'entrée (4), pour placer le nid dans le conteneur (2), dans lequel l'ouverture d'entrée (4) est prévue sur le dessus du conteneur (2) ;
ii. un élément de fermeture (5), pour fermer au moins partiellement l'ouverture d'entrée (4), dans lequel l'élément de fermeture (4) est le toit (8) du conteneur (2) ; et
iii. au moins une ouverture de sortie (12), permettant aux insectes de sortir du conteneur (2), formée d'une plaque perforée ;
b. dans lequel l'ouverture de sortie (12) est dimensionnée de façon à ce que les ennemis naturels de la chenille processionnaire, tels que la mouche *tachinidae* ou la guêpe ichneumon, puissent sortir du conteneur (2) et de façon à ce qu'au moins certains des papillons de la chenille processionnaire ne puissent pas sortir du conteneur (2) ; et
c. dans lequel les ouvertures de sortie (12) ont une dimension, un diamètre ou une largeur compris entre 3 et 6 mm, en particulier entre 4 et 6 mm
d. **caractérisé en ce que** l'élément de fermeture (5) est relié à un nombre de plateaux s'étendant principalement de façon horizontale via une tige centrale sensiblement verticale.

2. Dispositif de filtration (1) selon l'une quelconque des revendications précédentes, dans lequel l'élément de fermeture (5) est pourvu d'un verrou, pour maintenir l'élément de fermeture (5) dans l'état fermé.

3. Dispositif de filtration (1) selon l'une quelconque des revendications précédentes, dans lequel le dispositif comprend également une attache pour fixer le dispositif à ou sur un arbre, dans lequel l'attache comprend une poutre d'attache, poutre qui doit être fixée à l'arbre ainsi qu'au conteneur (2) ou à un oeillet, pour hisser le dispositif de filtration (1) dans un arbre.

4. Dispositif de filtration (1) selon la revendication 3, dans lequel la poutre est agencée pour être fixée verticalement à l'arbre, en particulier le long de la direction longitudinale de l'arbre, dans lequel la poutre est de préférence plus épaisse sur le dessus par rapport au fond, de sorte que le conteneur (2), par rapport à l'arbre, bascule légèrement.

5. Dispositif de filtration (1) selon l'une quelconque des revendications précédentes, dans lequel le conteneur est sensiblement fait de bois ou constitué d'un treillis.

6. Dispositif de filtration (1) selon l'une quelconque des revendications précédentes, dans lequel le conteneur (2) et/ou l'au moins une paroi latérale (7) est au moins partiellement perméable à l'air.

7. Procédé de contrôle naturel des chenilles processionnaires, utilisant un dispositif (1) selon l'une quelconque des revendications précédentes, comprenant les étapes consistant à :
a. placer un conteneur pouvant au moins partiellement être fermé (2), par exemple dans un arbre ou dans le sol ;
b. placer un nid avec des chrysalides de la chenille processionnaire ainsi que des chrysalides de ses ennemis naturels dans le conteneur (2) ;
c. fermer au moins partiellement le conteneur (2) et permettre au nid d'évoluer, de se transformer ou d'éclore ;
d. permettre aux ennemis naturels de la chenille processionnaire, tels que la mouche *tachinidae* ou la guêpe ichneumon, de sortir du conteneur (2) ; et
e. empêcher au moins certains des papillons des chenilles processionnaires de s'échapper du conteneur (2).

8. Procédé selon la revendication 7, dans lequel à l'étape a), le conteneur (2) est orienté au nord, par exemple avec au moins une ouverture de sortie orientée au nord.

9. Procédé selon la revendication 7 ou 8, dans lequel à l'étape a), le conteneur (2) est placé de façon à ce que le conteneur (2) soit incliné vers l'avant, par rapport à la verticale, dans lequel le conteneur (2) est de préférence incliné de 1 à 5 degrés par rapport à la verticale.

10. Procédé selon l'une quelconque des revendications 7 à 9, comprenant l'étape consistant à laisser le nid dans son environnement naturel jusqu'à ce que la phase des chrysalides soit atteinte avant de placer le nid dans le conteneur (2).
